(19) **Europäisches Patentamt**
**European Patent Office**
**Office européen des brevets**

(11) **EP 4 718 040 A1**

(12) **EUROPEAN PATENT APPLICATION**

(43) Date of publication:
01.04.2026 Bulletin 2026/14

(21) Application number: 24202681.3

(22) Date of filing: 25.09.2024

(51) International Patent Classification (IPC):
*G01F 1/688* (2006.01)

(52) Cooperative Patent Classification (CPC):
G01F 1/6884

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Solexperts GmbH**
**87439 Kempten (DE)**

(72) Inventors:
• **RAUTENBERG, David**
**76131 Karlsruhe (DE)**

• **KRIEGSEIS, Jochen**
**71134 Aidlingen (DE)**
• **FABRITIUS, Axel**
**74374 Zaberfeld (DE)**
• **TRICK, Thomas**
**8635 Dürnten (CH)**

(74) Representative: **Mayer, Aline Sophie**
**Isler & Pedrazzini AG**
**Postfach**
**Giesshübelstrasse 45**
**8027 Zürich (CH)**

(54) **SENSING DEVICE FOR FLOW VELOCITY MEASUREMENTS**

(57) A sensing device for measuring a flow velocity of a fluid (F), preferably groundwater, in a borehole is provided. The sensing device (1) comprises a heating element (11) configured to emit heat pulses for heating the fluid. The heating element (11) has a diameter Di, and a number N of sensor elements (12) being equidistantly arranged on a virtual circle with a circle diameter $D_2$ around the heating element (11), wherein each sensor element comprises a fiber Bragg grating (FBG) that is couplable to a light source (301) and to a read-out module (302). The number N of sensor elements (12) is equal to or greater than $\pi D_2/D_1$ and/or the N sensor elements (12) are arranged within a single optical fiber forming a loop with the circle diameter $D_2$ around the heating element (11).

FIG. 2B

## Description

### TECHNICAL FIELD

The present invention relates to a sensing device for measuring a flow velocity of a fluid, a borehole probe comprising said sensing device, a measurement setup comprising said borehole probe and a method for determining a flow velocity of a fluid using said measurement setup.

### PRIOR ART

The characterization and quantification of underground fluid dynamics, especially of groundwater, is of great importance in many scenarios. Measurements may be needed for pure observational purposes - e.g. to protect the groundwater, the environment and/or to monitor structures such dams and landfills - or to optimize the use of water and heat, e.g. in water and geothermal energy management.

Measurements of fluid flow in the geosphere often require drilling of boreholes through several stratigraphic layers. In areas where sediment layers are predominant, the boreholes may generally reach depths of several tens of meters. The boreholes may also be drilled through several hundreds of meters of solid rock where groundwater flows primarily along fractures or fracture networks. Depending on the geographical location of the local fissure aquifer, i.e. the layer containing water-bearing material, the boreholes may have depths of up to approximately 300 m, in particular for example in semi-arid areas.

In the present context, the terms "flow rate" and "flow speed" are used interchangeably and describe a scalar quantity. The term "flow velocity" is used to describe a vector quantity containing information regarding the flow direction, wherein the length of the flow velocity vector is the flow speed or flow rate.

Expected groundwater flow rates in this context are typically in the range of a few millimeters to a few decimeters per second ($10^{-4}$ - $10^{-2}$ m/s).

In the case of existing dams and landfills, survey boreholes may already be available, which generally allow direct measurements without drilling. In contrast to groundwater management, the expected flow rates of fluids to be measured in the context of dams and landfills are usually much lower, i.e. in the range of a few tens of micrometers to millimeters per second ($10^{-5}$ - $10^{-3}$ m/s).

Measuring points in the boreholes are typically limited in space and may sometimes be exposed to adverse environmental conditions, e.g. high pressure, high temperatures and/or aggressive chemicals. Moreover, the locally prevailing fluid may sometimes be heavily sedimented or contaminated. These factors make the use of many typical flow measurement systems such as turbine flow meters, variable area flow sensors or Venturi nozzles difficult and sometimes even impossible. Instead, implicit measuring methods such as heat pulse flow meters, colloidal scanning endoscope flow meters or acoustic Doppler flow meters are predominantly used, which, due to their measurement principle, may be able to record flow magnitude information, i.e. the flow speed, but generally not the direction of the flow.

Heat pulse flow sensors are based on the principle of pulse-like heat input into the flow by a heating element. Two temperature sensors are placed opposite each other next to the heating element and the temperature response of the heat pulses at both sensors is compared so that the colder sensor can be assigned to the windward (upstream) side and the warmer sensor to the leeward (downstream) side of the sensor. This allows the sign of the flow to be determined in one dimension if the sensor is aligned along a known pipe flow, for example.

By using information about a thermal inertia of the sensors, additional estimates regarding the flow speed may be obtained by using a transit time measurement between an onset of the heat pulse and a registered temperature response in the measurement signal.

Fiber Bragg gratings (FBGs) are elements which may be used as temperature sensors. A fiber Bragg grating (FBG) is a periodic perturbation of the effective refractive index in the core of an optical fiber. The periodic perturbation of the effective refractive index leads to the reflection of light that is propagating along the optical fiber for vacuum wavelengths $\lambda$ for which the so-called Bragg condition is satisfied:

$$\lambda = 2n_{\text{eff}}\Lambda$$

where $\Lambda$ is the Bragg grating period and $n_{\text{eff}}$ is the effective refractive index of the light in the optical fiber. Since the effective refractive index $n_{\text{eff}}$ depends on temperature, the wavelength of maximum reflectance $\lambda_{\text{max}}$ depends on temperature as well. Thus, a change in temperature at the FBG may be measured as a wavelength shift of the wavelength of maximum reflectance $\lambda_{\text{max}}$.

CN 116879576A discloses in Fig. 1 (a) and Fig. 1 (b) a measuring device for measuring flow velocities comprising three FBG sensors that are arranged on a circle at a distance of 1 mm from a heat source rod that is arranged at the center of the circle. Each FBG sensor forms an angle of 120° with the other two FBG sensors respectively. Each FBG sensor is arranged within a sensing optical fiber, the three sensing optical fibers being arranged in parallel to the heat source rod. The device is configured to measure the flow direction and the flow speed of a flow that is perpendicular to the sensing optical fibers and the heat source rod.

The device disclosed in CN 116879576A is specifically designed to measure ultra-low flow rates (<0.1 mm/s), as stated in the introduction and evidenced by the measurements shown in Fig. 5 of CN 116879576A.

At such low flow rates, a laminar flow occurs around the heat source rod and heat diffusion is larger than heat convection. However, with increasing flow rates, a turbulent flow will be created leeward (downstream) from the heat source rod and convection, which depends on the flow rate, will start to dominate. In such a regime where turbulent flow occurs downstream of the heat source rod and where heat convection is larger than diffusion, the device disclosed in CN 116879576A will cease to deliver meaningful data, as the FBG sensors will be too far apart to measure the relevant temperature changes needed to properly reconstruct the flow velocity, i.e. the flow rate and flow direction, of the fluid.

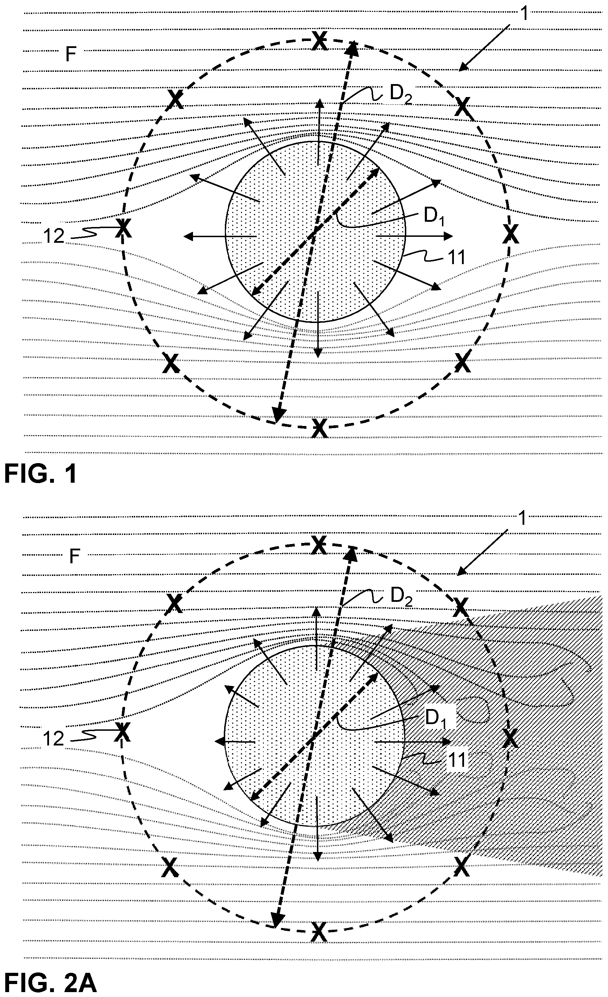

Moreover, in CN 116879576A, each FBG is located in a different sensing optical fiber. Fig.1(a) suggests mounting the sensing optical fibers in a bracket-type holder, however, no further details are disclosed on how to obtain a compact, mechanically stable system nor on how to prevent the FBG sensors from moving relative to each other. In addition, the bracket-type holder as shown in Fig. 1(a) would need to be oriented to avoid blocking the fluid flow, which requires knowing the approximate flow direction prior to the measurement.

SUMMARY OF THE INVENTION

In a first aspect, it is thus an object of the present invention to provide a sensing device for measuring a flow velocity of a fluid based on FBG sensors and a heating element, wherein the sensing device delivers meaningful data over a large range of flow rates, i.e. data from which flow speed and flow direction can be reconstructed both in situations where heat diffusion dominates as well as in situation where heat convection dominates and where turbulent flows may occur.

This object is achieved by a sensing device according to claim 1. Further embodiments of the invention are laid down in the dependent claims.

According to the first aspect of the invention, a sensing device for measuring a flow velocity of a fluid, preferably groundwater, in a borehole is provided, the sensing device comprising:

a heating element configured to emit heat pulses for heating the fluid, the heating element having a diameter $D_1$, and
a number N of sensor elements being equidistantly arranged on a virtual circle with a circle diameter $D_2$ around the heating element, wherein each sensor element comprises a fiber Bragg grating that is couplable to a light source and to a read-out module, wherein the number N of sensor elements is equal to or greater than $\pi D_2/D_1$.

In other words, the virtual circle has a circumference $U=\pi D_2$ and the number N of sensor elements is equal to or greater than said circumference U divided by the diameter $D_1$ of the heating element.

In yet other words, the number N of sensor elements is chosen such that the sensor elements being arranged on the virtual circle are separated by an arc length that is equal to or shorter than the diameter $D_1$ of the heating element.

By choosing the number N of sensor elements as described above, it is ensured that - even without previous knowledge of the flow direction of the fluid - at least one sensor element will be located in a thermal wake region of the heating element, i.e. in a region downstream (leeward) of the heating element, in which temperature changes may still be registered even if heat convection is much larger than heat diffusion.

Thus, by choosing the number N of sensor elements as described above, the sensing device is capable of recording temperature changes and thus provide information about the flow velocity over a large range of flow rates, preferably over at least a range of flow rates from $10^{-5}$ m/s to $10^{-2}$ m/s.

In particular, the sensing device may comprise N optical fiber ends, each optical fiber end having one sensor element, i.e. one FBG, being arranged therein. In other words, the sensing device may comprise a number N of optical fiber ends which corresponds to the number N of sensor elements.

The N optical fiber ends may be the ends of N separate optical fibers. The N separate optical fibers may each comprise an upper fiber portion.

In some embodiments, the upper fiber portion may be in-line with the respective fiber end, i.e. the upper fiber portion and optical fiber end may form a straight line.

In other embodiments, the N separate optical fibers may be arranged so as to resemble a whisk, i.e. the upper fiber portions may be bundled together along a central axis of the sensing device, the central axis being perpendicular to the virtual circle and extending through the center of the virtual circle. In such embodiments, the optical fiber end of each separate optical fiber may be connected to the upper fiber portion by a bent optical fiber section. Bundling the upper fiber portions enables the latter to be placed in a common sleeve for protection and stability.

In some embodiments, at least some, preferably all the FBGs are arranged such that the periodic perturbation of the effective refractive index within the respective FBG occurs in plane with the virtual circle. In particular, the N optical fiber ends may be arranged in plane with the virtual circle.

In alternative embodiments, at least some, preferably all the FBGs are arranged such that the periodic perturbation of the effective refractive index within the respective FBG occurs perpendicularly to the virtual circle. In particular, the N optical fiber ends may extend perpendicularly to the virtual circle.

In order to increase mechanical stability and hold to facilitate holding the sensor elements in place, each optical fiber end is preferably surrounded by a rigid capillary comprising or consisting of a heat-conductive material. The heat-conditioning material may in particular be stainless steel.

In a second aspect, it is a further object of the present invention to provide a sensing device for measuring a flow velocity of a fluid based on FBG sensors and a heating element, wherein the sensing device is particularly robust and compact.

This object is achieved by a sensing device according to claim 4.

According to the second aspect of the invention, a sensing device for measuring a flow velocity of a fluid, preferably groundwater, in a borehole is provided, the sensing device comprising:

a heating element configured to emit heat pulses for heating the fluid, the heating element having a diameter $D_1$, and

a number N of sensor elements being arranged on a virtual circle with a circle diameter $D_2$ around the heating element, wherein each sensor element comprises a fiber Bragg grating (FBG) that is couplable to a light source and to a read-out module,

wherein the N sensor elements are arranged within a single optical fiber forming a loop with the circle diameter $D_2$ around the heating element.

In particular, the loop, which extends along the virtual circle, may be formed by an end portion of the single optical fiber. The single optical portion may further comprise an upper fiber portion which is not in plane with the loop, in particular, wherein the upper fiber portion extends perpendicularly to the loop.

By using a single optical fiber containing the N sensor elements, a particularly compact and robust configuration is obtained. In particular, in contrast to configurations where each sensor element is located in a separate optical fiber end, this configuration provides the advantage that the sensor elements have a fixed position relative to each other, i.e. a position which cannot be as easily perturbed by external influences. Since knowing the position of each sensor element is especially relevant for reconstructing the flow direction, such a configuration increases the measurement accuracy.

In particular, the N sensor elements may be equidistantly arranged within the single optical fiber. The number N of sensor elements is preferably equal to or greater than $\pi D_2/D_1$. This enables the use of the sensing device for measuring a large range of flow rates, as described above.

Preferably, in order to increase mechanical stability, at least the loop formed by the single optical fiber is surrounded by a rigid capillary comprising or consisting of a heat-conductive material, the heat-conductive material being preferably stainless steel.

In the following, statements are made which apply regardless of whether the N sensor elements are arranged in N separate optical fiber ends or in a single optical fiber.

The number N refers to a natural number. The number N of sensor elements may be in the range of 6-16, preferably 8-12.

The symbol $\pi$ ("pi") refers to the mathematical constant that is the ratio of a circle's circumference to its diameter and is approximately equal to 3.14159.

In preferred embodiments, the diameter $D_2$ of the virtual circle is maximally 48 mm, preferably in the range of 40 mm - 46 mm, preferably in order to fit into a 2" (2 inch) piezometer tubing, which is a common standard size for groundwater monitoring.

The virtual circle may define a central axis of the sensing device, the central axis extending as a surface normal through the center of the virtual circle. The sensing device is in particular configured to measure a flow velocity of a fluid flowing in a flow plane that comprises the virtual circle, i.e to measure a fluid flow being in plane with the virtual circle.

When used to measure a flow velocity of a fluid flowing across a borehole with a central borehole axis that extends preferably vertically into the ground, the sensing device is preferably placed such that the central axis of the sensing device lies on the central borehole axis. In such an arrangement, the flow velocity of the flowing fluid is measured perpendicularly to the borehole axis.

The fluid is preferably a liquid, more preferably water, in particular groundwater.

Preferably, the heating element is located at the center of the virtual circle. The heating element may in particular have a circular cross section. The cross section and the virtual circle are preferably arranged concentrically. Preferably, the heating element is a cylindrical heating rod, preferably extending along the central axis. The heating rod may in particular have a length of 50 - 150 mm, preferably 100 mm.

Preferably, the heating element is configured to emit a heating power in the range of 20 W/m - 40 W/m.

Preferably, the heating element is configured to emit heat pulses with a pulse duration of 1 s -30 s and which occur at a heat pulse repetition frequency of 0.1 Hz -0.002 Hz.

Preferably, the heating element has a quasi-instantaneous response, i.e. has a response time that is close to zero. The response time of the heating element may be determined. If the response time amounts to a significant fraction of a pulse-transport time in the fluid, the response time may be taken into account when processing the measurement data.

In some embodiments, each sensor element has a different Bragg grating period $\Lambda$. In such a case, at a given temperature, each sensor element exhibits a different wavelength of maximum reflectance $\lambda_{max}$. In particular, the Bragg grating period $\Lambda$ of the N sensor elements may be chosen such that their wavelength of maximum reflectance $\lambda_{max}$ are sufficiently far apart, i.e. such that they do not overlap even if the N sensors experience different temperature shifts due to their different locations with respect to the fluid flow. In such a case, each sensor element may be directly identifiable via its wavelength of maximum reflectance $\lambda_{max}$, which may simplify data analysis. Each sensor element having a different Bragg grating period $\Lambda$ may be particularly advantageous in a configuration where the N sensor elements are arranged in a single optical fiber. In particular, the Bragg grating period $\Lambda$ of the N sensor elements may be chosen such that the wavelengths of maximum reflectance $\lambda_{max}$ among neighbouring sensor elements on the virtual circle are spaced by 3 nm - 15 nm, preferably by 10 nm. In a preferred embodiment, the sensing device may comprise 8 sensor elements, wherein the wavelengths of maximum reflectance $\lambda_{max}$ are located at 1510 nm, 1520 nm, 1530 nm, 1540 nm, 1550 nm, 1560 nm, 1570 nm and 1580 nm.

However, other embodiments are thinkable, in which each fiber Bragg grating has an identical Bragg grating period $\Lambda$, in particular if the N sensor elements are each located in a separate optical fiber end.

According to a third aspect of the invention, a borehole probe for measuring a flow velocity of a fluid, preferably groundwater, in a borehole is provided, the borehole probe comprising:

> a sensing device as described above, and
> a compass module for determining an orientation of the sensing device in space.

In particular, the compass module may be used to transform directional information obtained in a sensing coordinate system of the sensing device to a geographic, i.e. ground-fixed coordinate system.

The compass module may in particular comprise at least one of the following sensor components: a gyro accelerometer, preferably with up to nine axes, and/or a magnetometer and/or an inclinometer, i.e. a tilt sensor. Preferably, the compass module comprises all three mentioned sensor components, since the combination of said three sensor component makes it possible to determine an absolute, three-dimensional spatial position and an orientation of a measuring point in the borehole. Preferably, the compass module exhibits an accuracy of at least 10° in order to minimize error propagation effects during coordinate transformation.

In particular, the borehole probe may comprise data transmission means, in particular a data transmission cable, for transferring data obtained by the compass module to an analyzer. Preferably, the data transmission means enable data transmission in real-time. The analyzer may in particular be integrated within a read-out module that is also further configured for reading out the sensing device of the present invention.

The borehole probe may further comprise at least one centralizer element for facilitating mechanical guiding of the sensing device. The at least one centralizer element may in particular comprise a guide structure with acts as a radial distance holder to prevent the sensing device and/or the compass module from touching the borehole wall of the borehole in which it is inserted when in use.

In some embodiments, the borehole probe may comprise two centralizer elements, wherein a first centralizer element is arranged above the sensing device along the central axis, in particular above the compass module, and a second centralizer element being arranged below the sensing device to facilitates damage-free transport of the borehole probe along the borehole.

In the present context, the terms "above" and "below" relate to a typical orientation of the borehole probe when it is in use, i.e. as oriented when being lowered into a borehole that extends vertically into the ground.

The borehole probe may further comprise a connection cable bundle. The connection cable bundle may comprise a suspension cable to lower the borehole probe into a borehole, to pull it out from the borehole and/or to hold it at a specific position within the borehole.

Additionally or alternatively, the connection cable bundle may comprise a power cable to power the heating element.

Additionally or alternatively, the connection cable bundle may comprise the upper portion of the N separate optical fibers or the upper portion of the single optical fiber, depending on the configuration of the sensing device.

Additionally or alternatively, the connection cable bundle may comprise the data transmission cable for transferring data obtained by the compass module.

The connection cable bundle may comprise a common cable sleeve surrounding one or more of the cables listed above and/or the upper portions of the optical fibers or the upper portion of the single optical fiber to provide protection and mechanical stability.

According to a fourth aspect of the invention, a measurement setup for measuring a flow velocity of a fluid, preferably of groundwater, in a borehole is provided, the measurement setup comprising:

> a borehole probe as described above;
> a heat pulse generator to drive the heating element;
> a probe interrogation setup, the probe interrogation setup comprising:
>
> > a light source configured to emit light, and
> > a read-out module configured to detect a portion of the light reflected by the fiber Bragg grating of each sensor element, wherein the light source and the read-out module are coupled, preferably fiber-coupled, to the borehole probe.

The heat pulse generator may be a power controller operating with direct current. Alternatively, the heat pulse generator may be a power controller operating with alternating current. Preferably, the heat pulse generator has a power consumption in a range of 4W-8W.

Preferably, the heat pulse generator and the probe interrogation setup are configured to be synchronized to each other. In particular, the heat pulse generator may be configured to emit a trigger signal and the read-out module may be configured to comprise control electronics capable of receiving and processing the trigger signal.

The read-out module may comprise a separate measurement channel for each sensor element. This may be particularly advantageous in case each FBG has an identical Bragg grating period. The separate measurement channels may correspond to separate optical fiber inputs in the read-out module.

Alternatively, in case each sensor element has a different Bragg grating period, the read-out module may comprise a single measurement channel, in particular a single optical fiber input, for all the sensor elements.

In particular, the light source and the read-out module may be integrated in a single device housing and may be electronically interconnected.

Preferably, the light source emits in a wavelength rage of 1460 nm - 1620 nm, in particular of 1500 nm - 1600 nm, which is an eye-safe wavelength range that is compatible with telecom-grade optical fibers, which have a fiber core made of silica.

In particular, the light source may be a laser, in particular a swept-wavelength laser. The read-out module preferably comprises an optical spectrum acquisition module that is configured to acquire an optical spectrum over a wavelength acquisition bandwidth that corresponds to a sweeping bandwidth of the swept-wavelength laser. The read-out module may in in particular comprise a field programmable gate array (FPGA) for data processing.

In order to mitigate measurement errors due to birefringence of polarized light, the interrogation setup may further comprise a depolarizer. As an example, the interrogation setup may be a HYPERION si155 interrogator manufactured by Luna.

The measurement setup may further comprise a support device for supporting the connection cable bundle outside the borehole. In particular, the support device may comprise a cable drum to wind up the cable bundle and/or a tripod with a pully system to guide the cable bundle into the borehole.

In a fifth aspect of the invention, a method for determining a flow velocity of a fluid, preferably groundwater, in a borehole using a measurement setup as described above, is provided, the method comprising:

> introducing the borehole probe into the borehole until the sensing device is surrounded by the fluid;
> heating the fluid in a pulsed manner by driving the heating element with the heat pulse generator such that the heating element emits heat pulses, preferably in a radial direction;
> sending light emitted by the light source to the sensor elements, wherein the fiber Bragg grating of each sensor element reflects a portion of the light;
> measuring a response of the sensor elements by detecting the reflected portion of the light from each sensor element using the read-out module;
determining the flow velocity of the fluid based on the response of the sensor elements.

In particular, the flow velocity is determined in a plane in which the virtual circle of the sensing device lies, which, in case the central axis of the sensing device is parallel to the central axis of the borehole, corresponds to a direction that is perpendicular to the central axis of the borehole.

In some embodiments, the heat pulses may have a duration that is sufficiently long to create a steady temperature environment over a pre-defined period of time.

The response may be a time-dependent is spectral signal, and determining the flow velocity of the fluid based on the response of the sensor elements may comprise comparing the time-dependent spectral signal of the N sensor elements to each other in order to determine a flow direction and a speed of the fluid.

The method may in particular comprise:

> determining the flow velocity, in particular the flow direction, in a sensing coordinate system of the sensing device;
> acquiring positional data about a position of the sensing device in space from the compass module, and
> transferring the determined flow velocity into a ground-fixed coordinate system.

In situations where heat diffusion dominates, e.g. for small flow rates, determining the flow velocity of the fluid based on the response of the sensor elements may in particular comprise determining a signal onset to define an arrival time corresponding to the heat pulse reaching the respective sensor element, and interpolating the arrival times of each sensor element to increase a measurement precision of the flow direction.

In particular in situations where heat convection dominates, e.g. for high flow rates, determining the flow velocity of the fluid based on the response of the sensor elements may in particular comprise identifying the sensor elements which register any temperature change at all to spatially locate the thermal wake region of the heating element. If more than one sensor element registers a temperature change, the method may further comprise determining a signal onset to define an arrival time corresponding to the heat pulse reaching the respective sensor elements among the sensor elements registering a temperature change, and interpolating the arrival times of said sensor elements to increase a measurement precision of the flow direction.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1   shows a schematical view of a sensing device 1 according to an embodiment the first aspect of the present invention in a laminar flow;

Fig. 2A   shows the embodiment of Fig. 1 in a turbulent flow;

Fig. 2B   shows the embodiment of Fig. 1 rotated by an angle of 22.5° with respect to the flow;

Fig. 3   shows a perspective view of an embodiment of the sensing device according to the first aspect of the present invention;

Fig. 4   shows a perspective view of an embodiment of the sensing device according to the second aspect of the present invention;

Fig. 5   shows a borehole probe that comprises the sensing device of Fig. 4;

Fig. 6   shows a measurement setup that comprises the borehole probe of Fig. 5 in a first measurement environment;

Fig. 7   shows a measurement setup that comprises the borehole probe of Fig. 5 a second measurement environment, and

Fig. 8   show a flow diagram of a method for determining a flow velocity of a fluid using the measurement setup of Fig. 5 or Fig. 6.

DESCRIPTION OF PREFERRED EMBODIMENTS

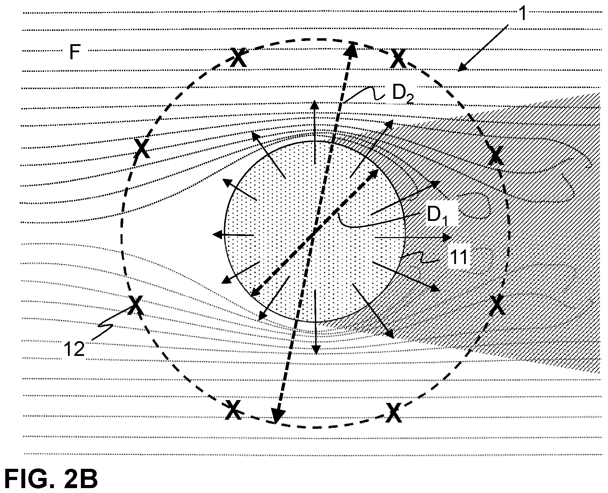

In Fig. 1, Fig. 2A and Fig. 2B, a schematical view of a sensing device 1 according to an embodiment of the first aspect of the present invention is shown. The sensing device 1 comprises sensor elements 12, which are symbolically represented by an "X" in these figures, and which are arranged on a virtual circle with a circle diameter $D_2$ around a heating element 11. In the embodiments shown here, the heating element 11 has a circular cross section with a diameter $D_2$. The heating element 11 and the virtual circle defined by the sensor elements 12 are arranged concentrically. The heating element 11 is configured to emit heat pulses in a radial direction, as schematically indicated by the arrows pointing radially outwards. The sensor elements 12 each comprise a fiber Bragg grating (FBG) that is couplable to a light source and to a read-out module. Each FBG has a wavelength of maximum reflectance $\lambda_{max}$ at which maximum reflectance of light occurs. As this center wavelength $\lambda_{max}$ depends on a temperature at the FBG, each FBG can be used as a temperature sensor. In Fig. 1, Fig. 2A and Fig. 2B, the sensing device 1 is placed in a flow of a fluid F, which is visualized by dotted lines.

Fig. 1 represents a situation in which the flow rate is sufficiently low for the flow to be laminar, i.e. for the fluid to smoothly pass around the heating element 11 without creating turbulences. In such a situation, the heat transfer within the fluid is mostly governed by diffusion, which is symbolized in Fig. 1 by the arrows representing the heat pulses having approximately the same length in all directions. In a situation in which the flow rate is zero, all the sensor elements 12 simultaneously register the heat pulses emitted by the heating element 11, i.e. the arrival time of the heat pulses is the same at each of the sensor elements 12. At low flow rates, all the sensor elements 12 will detect the heat pulses, however with a temporal delay that depends on their position with respect to the flow direction as wells as the flow speed.

Fig. 2A and Fig. 2B represent a situation in which the flow rate is sufficiently high for the flow to be turbulent, i.e. for turbulences to occur in the fluid leeward, i.e. downstream, from the heating element 11. In this situation, the heat transfer within the fluid is mostly governed by convection, which is symbolized in Fig. 2A and Fig. 2B by the arrows representing the heat pulses being shorter on an upstream side of the heating element 11 and longer on a downstream side of the heating element 11. In such a situation, only sensor elements 12 located in the thermal wake region of the heating element 11, i.e. located within a certain cone angle downstream of the heating element 11 as symbolically indicated by the shaded area in Figs. 2A and 2B, may be able to register the heat pulses, whereas all sensor elements 12 that are arranged upstream of the heating element 11 outside the thermal wake region are no longer able to register the heat pulses emitted by the heating element 11 at all, since the convection in flow direction prevents the heat from reaching these upstream sensor elements 12. In general, the following relation applies: the higher the flow rate, the smaller the cone angle, i.e. the narrower the thermal wake region. The number of sensor elements 12 located in the thermal wake region may also depend on the angular orientation of the sensing device with respect to the flow direction: in Fig. 2A, only one sensor element 12 is located in the thermal wake region, whereas in Fig. 2B, where the same sensing device is shown in a different angular position, two sensor elements 12 are located in the thermal wake region.

In order to ensure that at least one sensing element 12 is able to register the heat pulses and thus deliver meaningful data also in a regime where convection is dominant, the sensing device 1 according to the first aspect of the present invention has a number N of sensor elements which is equal or greater than $\pi D_2/D_1$. In the schematical example shown in Figs. 1-2B, the ratio $\pi D_2/D_1 = 6.7$ and the sensing device has eight sensor elements.

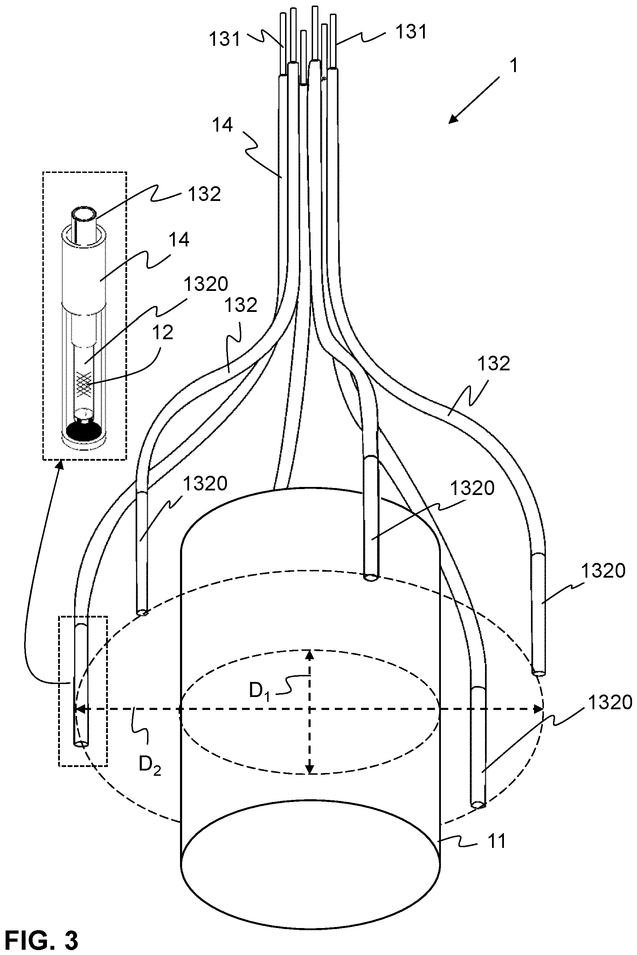

Fig. 3 shows perspective view of an embodiment of the sensing device 1 according to the first aspect of the present invention, where the sensing device 1 comprises six sensor elements 12, each sensor element 12 being arranged within an optical fiber end 1320 of an optical fiber. The six optical fibers each have an upper fiber portion 131, which is bundled together with the upper fiber portions 131 of the other optical fibers along a central axis C, and a lower fiber portion 132, which radially spreads out as a bent optical fiber section such that the optical fiber ends 1320, which are located at the end of the lower fibers portions 132, are spread out to form a virtual circle with a diameter $D_2$ around the heating element 11. In the embodiment shown in Fig. 3, the heating element 11 is a cylindrical heating rod with a diameter $D_1$. The virtual circle and the heating rod 11 are concentrically arranged, and the optical fiber ends 13 extend in parallel to the heating rod 11.

In the embodiment shown in Fig. 3, the upper fiber portions 131 and the lower fiber portions 132 including the optical fiber ends 1320 of each optical fiber are surrounded by a rigid capillary 14 to help maintaining the placement in space of the sensor elements 12 located within the optical fiber ends 1320. The rigid capillaries preferably comprise or consist of a heat-conductive material, for instance stainless steel.

The inset in Fig. 3 shows an enlarged view of an optical fiber end 1320 comprising a fiber Bragg grating (FBG). As shown in this inset, the optical fiber may be surrounded by a cladding for protection and to enhance mechanical flexibility.

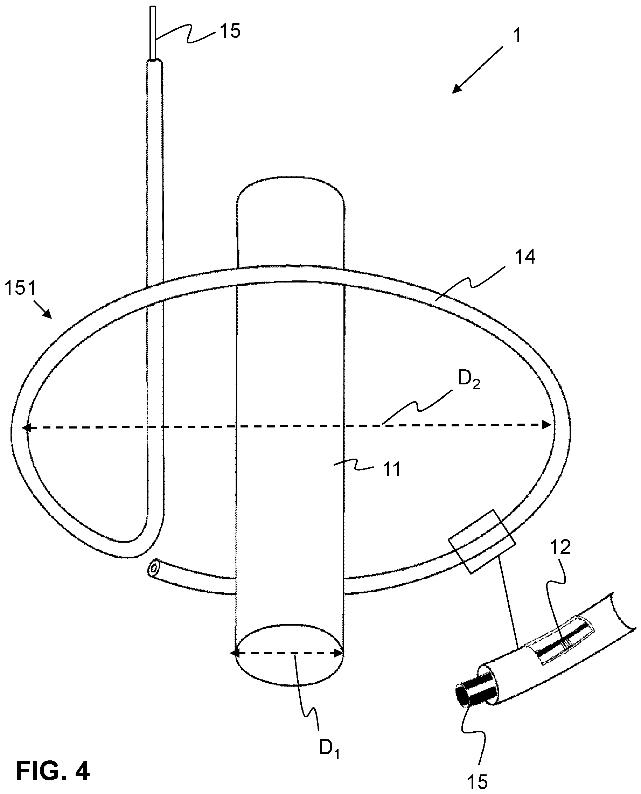

Fig. 4 shows an embodiment of a sensing device according to the second aspect of the present invention. The sensing device 1 comprises a heating element 11 in the form of a cylindrical heating rod with a diameter $D_1$, the heating rod 11 being arranged at the center of a loop 151 with a circle diameter $D_2$, the loop 151 being formed by a single optical fiber 15. To increase mechanical stability, the optical fiber 15 is surrounded by a rigid capillary 14, which preferably comprise or consist of a heat-conductive material, for instance stainless steel. The sensing device 1 comprises N sensor elements in the form of fiber Bragg gratings (FBG) all arranged within the loop 151 formed by the single optical fiber 15. The number N of sensor elements 12 may be chosen arbitrarily, however, in a preferred embodiment, the number N is equal to or greater than $\pi D_2/D_1$ and the N sensor elements 12 are equidistantly distributed along the loop 151.

The inset in Fig. 4 shows an enlarged portion of the loop 151 that is cut open to show the optical fiber 15 arranged within the rigid capillary 14 and the FBG arranged within the optical fiber 15. The other N-1 sensor elements are not explicitly visible in Fig. 4, as they are covered by the capillary 14.

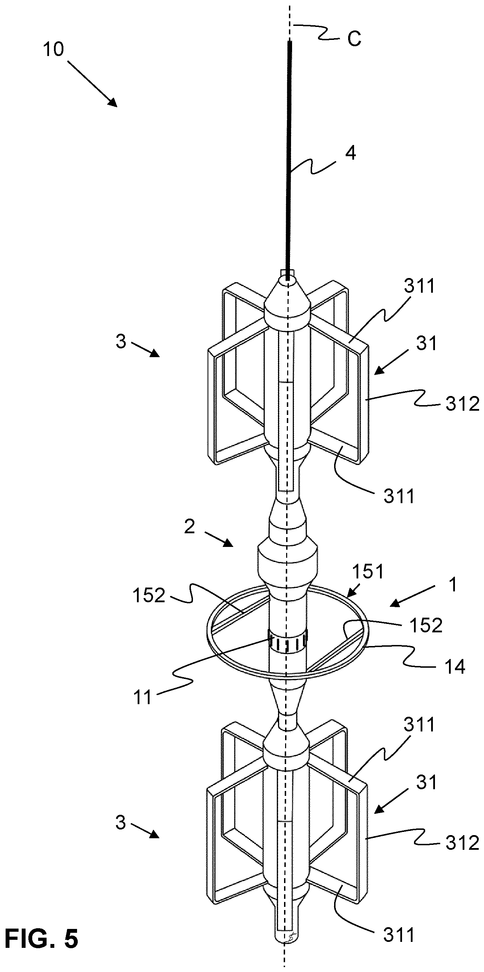

Fig. 5 shows a borehole probe 10 that comprises a sensing device 1 according to the second aspect of the present invention, i.e. wherein N sensor elements are all arranged within a single optical fiber 15 forming a loop 151. The heating element 11 extends along a central axis C and the loop 151 lies in a plane being perpendicular to the central axis C. The sensing device 1 shown in Fig. 5 comprises two connection bars 152, which mechanically connect the loop 151 to a support structure that extends along the central axis C. The connection bars 152 are preferably hollow, such that the optical fiber 15 may be guided within the connection bar 152.

The borehole probe further comprises a compass module 2, which in the embodiment shown in Fig. 5 is arranged axially along the central axis C above the sensing device 1. The compass module is used to transform directional information obtained in a sensing coordinate system of the sensing device to a geographic, i.e. ground-fixed coordinate system.

The borehole probe shown in Fig. 5 furthermore comprises two centralizer elements, a first centralizer element being arranged above the sensing device 1, in particular above the compass module 2, and a second centralizer element being arranged below the sensing device 1. The centralizer elements 3 shown in Fig. 5 each comprise six guide structures 31 which act as radial distance holders to prevent the sensing device 1 and/or the compass module 2 from touching the borehole wall of the borehole in which it is inserted when in use. The guide structures 31 have the form of square brackets, i.e. they each comprise two distance arms 311 extending radially outwards from the central axis C, the two distance arms 311 being connected by a connection piece 312 which extends in parallel to the central axis C. Alternatively, the guide structures 31 may have the form of round brackets (not shown).

The borehole probe 10 further comprises a connection cable bundle 4. The connection cable bundle 4 comprises a suspension cable attached to the first centralizer element 3 to lower the borehole probe 10 into a borehole, to pull it out from the borehole and/or to hold it at a specific position within the borehole. The connection cable bundle 4 preferably further comprises a power cable to power the heating element 11, as well as an upper portion of the optical fiber 15 and a data transmission cable for transferring data obtained by the compass module. In the embodiment shown in Fig. 5, the cable bundle 4 comprises a common cable sleeve surrounding the suspension cable, the power cable, the data transmission cable and the upper portion of the optical fiber 15. Thus, these individual cables and the upper portion of the upper portion of optical fiber 15 are hidden in Fig. 4. However, alternatively, these individual cables and the upper portion of the optical fiber 15 may be separately arranged from each other and may not form a single connection cable bundle.

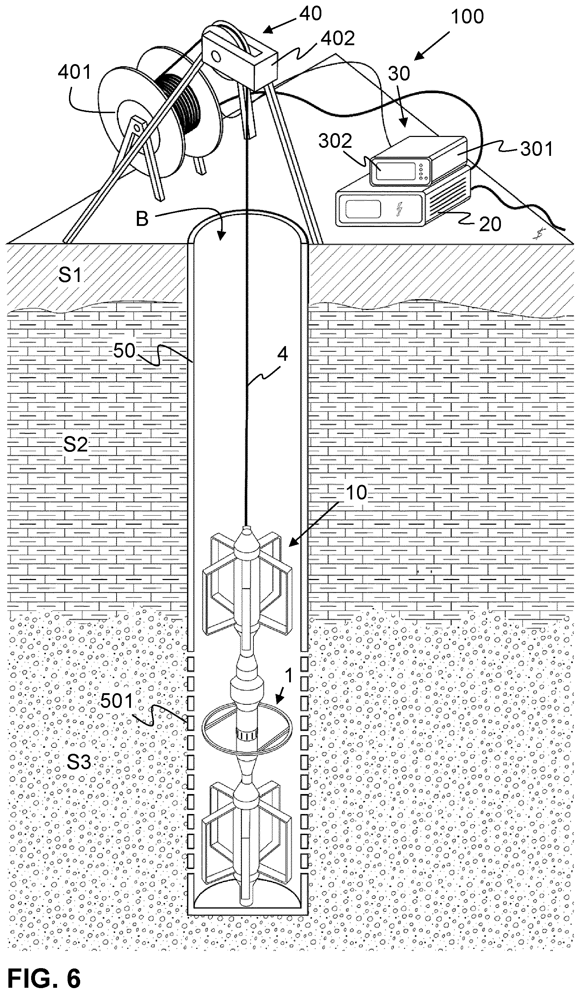

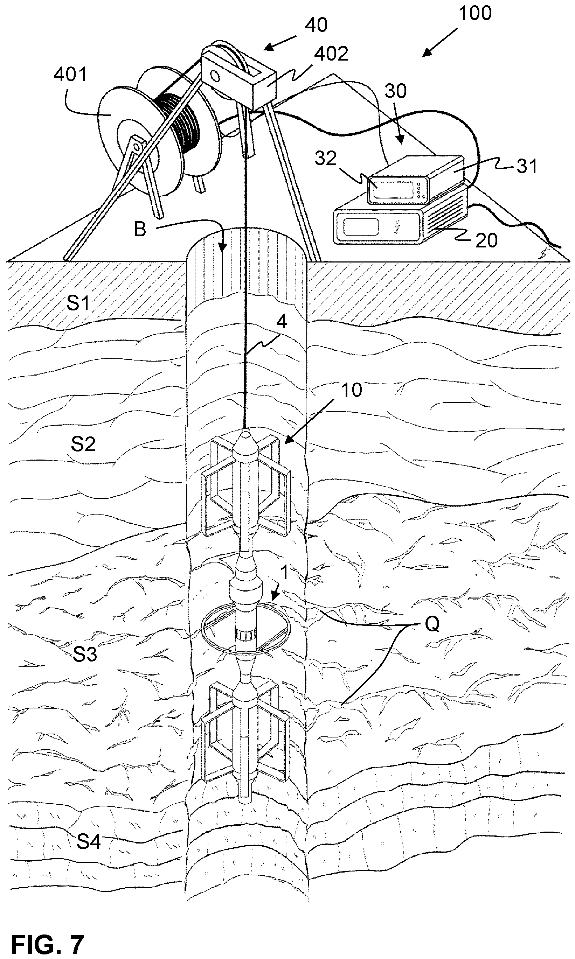

Fig. 6 and Fig. 7 show a measurement setup 100 according to the third aspect of the present invention, which comprises the borehole probe 10 shown in Fig. 5. In addition to the borehole probe 10, the measurement setup 100 comprises a heat pulse generator 20 to drive the heating element 11 and a probe interrogation setup 30. The probe interrogation setup 30 comprises a light source 301 configured to emit light, and a read-out module 302 configured to detect a portion of the light reflected by each sensor element 12 in the sensing device 1 of the borehole probe 10. As symbolically visualized in Fig. 5 and Fig. 6, the light source 301 and the read-out module 302 may be integrated in a single device housing and may be electronically interconnected. In particular, the probe interrogation setup 30 may be a HYPERION si155 interrogator manufactured by Luna, which combines a swept-wavelength laser as the light source 301 and a read-out module 302 comprising a field programmable gate array (FPGA) in a single device.

When the measurement setup 100 is in use to measure a flow velocity of a fluid in a borehole B, as shown in Fig. 6 and Fig. 7, the borehole probe 10 is located within the borehole B, whereas the heat pulse generator 20 and the probe interrogation setup 30 are preferably located outside the borehole B. The measurement setup 100 preferably further comprises a support device 40 for supporting the connection cable bundle 4 outside the borehole B. In particular, the support device 40 may comprise a cable drum 401 to wind up the cable bundle 4 and a tripod with a pully system 402 to guide the cable bundle 4 into the borehole B.

In Fig. 6, the use of the measurement setup 100 is shown to measure a flow velocity of groundwater in a borehole B that vertically extends through three different layers of the geosphere (from top to bottom): a first layer S1, which in the example shown in Fig. 6 is soil, a second layer S2, which comprises or consists of sediments with very low hydraulic conductivity, and a third layer S3, which comprises or consists of sediments with intermediate to low hydraulic conductivity. Boreholes B extending through such a layer structure are preferably consolidated with a borehole casing 50, which may be a pipe comprising or consisting of a plastic material. The borehole casing 50 may have a lower portion 501 that forms a filter structure through which groundwater can enter the borehole B so as to flow across the borehole B in a direction perpendicular to a central axis of the borehole B and thus perpendicular to the central axis C of the borehole probe 10 when the latter is in a measuring position. If the casing 50 is a pipe, the filter structure may be formed by holes in the pipe that allow the groundwater to radially enter the borehole B. As shown in Fig. 6, to measure groundwater flow, the filter structure is preferably arranged in the third layer S3, and the borehole 10 is placed in the borehole B such that the sensing device 1 is surrounded by the filter structure in order for the groundwater to reach the sensing device 1.

In Fig. 7, the use of the measurement setup 100 is shown to measure a flow velocity of groundwater in a borehole B that vertically extends through four different layers of the geosphere (from top to bottom): a first layer S1, which in the example shown in Fig. 7 is soil or weathered rock, a second layer S2, which comprises or consists of hard rock with very low hydraulic conductivity, a third layer S3, which comprises or consists of hard rock with intermediate to low hydraulic conductivity, and a fourth layer S4, which comprises or consists of hard rock with very low hydraulic conductivity along discrete fractures or fracture networks. Boreholes B extending through such a layer structure do not necessarily need to be cased and the borehole probe 10 may be directly inserted into an open hole section of borehole B. As no coarse sediment ingress is to be expected in such a layer structure, the borehole probe 10 may be surrounded by a fine grid, e.g. with a mesh size of 0.5 mm, e.g. made of stainless steel, when used in the rock to prevent impurities from reaching the sensing device 1. As shown in Fig. 7, the third layer S3 comprises cavities Q which may carry groundwater. To measure groundwater flow, the borehole 10 is thus placed in the borehole B such that the sensing device 1 is surrounded the third layer S3, which has the highest hydraulic conductivity among the second layer S2, the third layer S3 and the fourth layer S4.

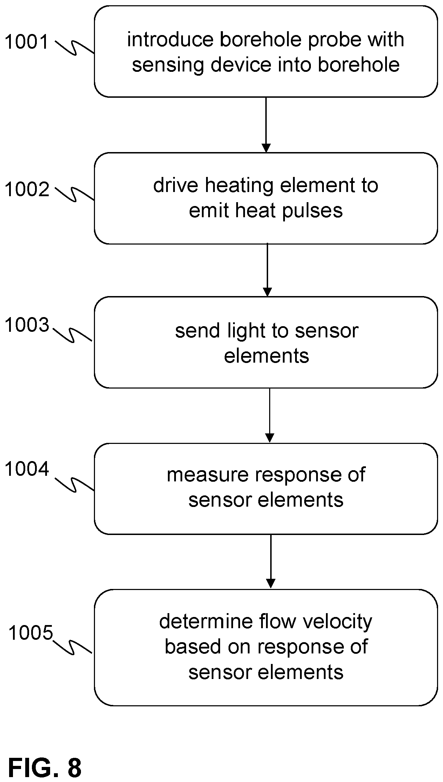

Fig. 8 schematically illustrates a method for determining a flow velocity of a fluid using a measurement setup 100 as described above.

In a first step 1001, the borehole probe 10 is introduced into the borehole B until the sensing device 1 is surrounded by the fluid F, whose flow velocity is to be measured.

In a second step 1002, the fluid F is heated in a pulsed manner by driving the heating element 11 with the heat pulse generator 20 such that the heating element 11 emits heat pulses.

In a third step 1003, which temporally overlaps with the second step 1002, light emitted by the light source 301 of the probe interrogation setup 30 is sent to the sensor elements 12, i.e. to the fiber Bragg gratings (FBGs), so that the fiber Bragg grating (FBG) of each sensor element 12 reflects a portion of the light.

In a fourth step 1004, a response of the sensor elements 12 is measured by detecting the reflected portion of the light from each sensor element 12 using the read-out module 302.

In a fifth step 1005, the flow velocity of the fluid is determined based on the response of the sensor elements 12 by the time-dependent spectral signal of the N sensor elements 12 to each other in order to determine a flow direction and a speed of the fluid F.

LIST OF REFERENCE SIGNS

| 1 | sensing device |
| 11 | heating element |
| 12 | sensor element |
| 13 | optical fiber |
| 131 | upper fiber portion |
| 132 | lower fiber portion |
| 1320 | optical fiber end |
| 14 | capillary |
| 15 | single optical fiber |
| 151 | loop |
| 152 | connection bar |
| | |
| 2 | compass module |

3       centralizer element
31      guide structures
311     distance arm
312     connection piece

4    connection cable bundle

10     borehole probe

30     probe interrogation setup
301    light source
302    read-out module

40     support device
401    cable drum
402    tripod with pulley system

100    measurement setup

1001    first step
1002    second step
1003    third step
1004    fourth step
1005    fifth step

B       borehole
C       central axis
F       fluid
FBG     fiber Bragg grating
S1      first layer
S2      second layer
S3      third layer
S4      fourth layer
Q       cavities

**Claims**

1.  A sensing device (1) for measuring a flow velocity of a fluid (F), preferably groundwater, in a borehole (B), the sensing device (1) comprising:

    a heating element (11) configured to emit heat pulses for heating the fluid, the heating element (11) having a diameter $D_1$, and
    a number N of sensor elements (12) being equidistantly arranged on a virtual circle with a circle diameter $D_2$ around the heating element (11), wherein each sensor element comprises a fiber Bragg grating (FBG) that is couplable to a light source (301) and to a read-out module (302), wherein the number N of sensor elements (12) is equal to or greater than $\pi D_2/D_1$.

2.  The sensing device (1) of claim 1, wherein the sensing device (1) comprises N optical fiber ends (1320), each optical fiber end (1320) having one sensor element (12) being arranged therein.

3.  The sensing device (1) of claim 1 or 2, wherein each optical fiber end (1320) is surrounded by a rigid capillary (14) comprising or consisting of a heat-conductive material.

4.  A sensing device (1) for measuring a flow velocity of a fluid (F), preferably of groundwater, in a borehole (B), the sensing device (1) comprising:

    a heating element (11) configured to emit heat pulses for heating the fluid (F), the heating element (11) having a diameter $D_1$, and
    a number N of sensor elements (12) being arranged on a virtual circle with a circle diameter $D_2$ around the heating element (11), wherein each sensor element (12) comprises a fiber Bragg grating (FBG) that is couplable to a light source (301) and to a read-out module (320), wherein the N sensor elements (12) are arranged within a single optical fiber (15) forming a loop (151) with the circle diameter $D_2$ around the heating element (11).

5.  The sensing device (1) of claim 4, wherein the N sensor elements (12) are equidistantly arranged within the single optical fiber (15), and wherein the number N of sensor elements (12) is preferably equal to or greater than $\pi D_2/D_1$.

6.  The sensing device (1) of claim 4 or 5, wherein at least the loop (151) formed by the single optical fiber (15) is surrounded by a rigid capillary (14) comprising or consisting of a heat-conductive material.

7.  The sensing device (1) of any one of the preceding claims, wherein each sensor element (12) has a different Bragg grating period.

8.  The sensing device (1) of any one of claims 1-3, wherein each fiber Bragg grating (FBG) has an identical Bragg grating period.

9.  A borehole probe (10) for measuring a flow velocity of a fluid (F), preferably groundwater, in a borehole (B), the borehole probe (10) comprising:

    a sensing device (1) according to any one of the preceding claims, and
    a compass module (2) for determining an orientation of the sensing device (1) in space.

10. The borehole probe of claim 9, further comprising at least one centralizer element (3) for facilitating mechanical guiding of the sensing device (1).

11. A measurement setup (100) for measuring a flow velocity of a fluid (F), preferably of groundwater, in a borehole (B), the measurement setup (100) comprising:

a borehole probe (10) according to claim 9 or 10;
a heat pulse generator (20) to drive the heating element (11);
a probe interrogation setup (30), the probe interrogation setup comprising:

a light source (301) configured to emit light, and
a read-out module (302) configured to detect a portion of the light reflected by the fiber Bragg grating (FBG) of each sensor element (12), wherein the light source (301) and the read-out module (302) are coupled, preferably fiber-coupled, to the borehole probe (10).

12. The measurement setup of claim 11, wherein the read-out module (302) comprises a separate measurement channel for each sensor element (12).

13. The measurement setup of claim 11 or 12, wherein the sensing device (1) of the borehole probe (10) is a sensing device (1) according to claim 7, and wherein the read-out module (302) comprises a single measurement channel for all the sensor elements (12).

14. A method for determining a flow velocity of a fluid (F), preferably groundwater, in a borehole (B) using a measurement setup (100) according to any one of claims 11-13, the method comprising:

(1001) introducing the borehole probe (10) into the borehole (B) until the sensing device (1) is surrounded by the fluid (F);
(1002) heating the fluid (F) in a pulsed manner by driving the heating element (11) with the heat pulse generator (20) such that the heating element (11) emits heat pulses;
(1003) sending light emitted by the light source (301) to the sensor elements (12), wherein the fiber Bragg grating (FBG) of each sensor element reflects a portion of the light;
(1004) measuring a response of the sensor elements (12) by detecting the reflected portion of the light from each sensor element (12) using the read-out module (302);
(1005) determining the flow velocity of the fluid based on the response of the sensor elements (12).

15. The method of claim 14, wherein the response is a time-dependent spectral signal, and wherein determining the flow velocity of the fluid (F) based on the response of the sensor elements (12) comprises:
comparing the time-dependent spectral signal of the N sensor elements (12) to each other in order to determine a flow direction and a speed of the fluid.

**FIG. 1**

**FIG. 2A**

**FIG. 2B**

**FIG. 3**

**FIG. 4**

**FIG. 5**

**FIG. 6**

**FIG. 7**

FIG. 8

# EUROPEAN SEARCH REPORT

**Application Number**

EP 24 20 2681

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | CN 116 879 576 A (SINOHYDRO FOUND ENG CO LTD; UNIV XIAMEN) 13 October 2023 (2023-10-13) * figure 1b * | 1-15 | INV. G01F1/688 |
| A | US 8 217 333 B2 (BOSSELMANN THOMAS [DE]; WILLSCH MICHAEL [DE] ET AL.) 10 July 2012 (2012-07-10) * figure 4 * | 1-15 | |
| A | EP 4 202 380 A1 (SOLEXPERTS GMBH [DE]) 28 June 2023 (2023-06-28) * figures 2,9 * | 1-15 | |

**TECHNICAL FIELDS SEARCHED (IPC)**

G01F

The present search report has been drawn up for all claims

| Place of search | Date of completion of the search | Examiner |
|---|---|---|
| The Hague | 7 February 2025 | Quertemont, Eric |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 2681

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2025

| Patent document cited in search report | | Publication date | Patent family member(s) | | Publication date |
|---|---|---|---|---|---|
| CN 116879576 | A | 13-10-2023 | NONE | | |
| US 8217333 | B2 | 10-07-2012 | CN | 101405579 A | 08-04-2009 |
| | | | DE 102006012229 B3 | | 14-06-2007 |
| | | | EP | 1994371 A1 | 26-11-2008 |
| | | | ES | 2342686 T3 | 12-07-2010 |
| | | | JP | 4959730 B2 | 27-06-2012 |
| | | | JP | 2009529687 A | 20-08-2009 |
| | | | PL | 1994371 T3 | 30-09-2010 |
| | | | RU | 2008140937 A | 27-04-2010 |
| | | | US | 2009165551 A1 | 02-07-2009 |
| | | | WO | 2007104605 A1 | 20-09-2007 |
| EP 4202380 | A1 | 28-06-2023 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 116879576 A